# EUROPÄISCHE PATENTSCHRIFT

(11) **EP 0 603 481 B1**
(45) Veröffentlichungstag und Bekanntmachung des Hinweises auf die Patenterteilung: **14.08.1996**
(21) Anmeldenummer: 93116092.3
(22) Anmeldetag: 05.10.1993
(51) Int. Cl.: B02C 23/14

(54) **Verfahren und Anlage zur Zerkleinerung von Mahlgut**
Method and arrangement for milling grinding stock
Procédé et installation pour le broyage de matière à moudre

(30) Priorität: 25.11.1992 DE 4239602
(43) Veröffentlichungstag der Anmeldung: 29.06.1994
(73) Patentinhaber: KRUPP POLYSIUS AG, D-59269 Beckum (DE)
(72) Erfinder: Kupper, Detlev, Dr.-Ing., D-48291 Telgte (DE); Knobloch, Osbert, Dipl.-Ing., D-33378 Rheda-Wiedenbrück (DE); Kimmeyer, Ludger, Dipl.-Ing., D-59269 Beckum (DE); Brosowski, Werner, Dipl.-Ing., D-59075 Hamm (DE)
(74) Vertreter: Tetzner, Volkmar, Dr.-Ing. Dr. jur.

(56) Entgegenhaltungen:
- EP-A- 0 406 591
- CH-A- 455 615
- DE-A- 2 364 277
- DE-B- 1 132 778

## Beschreibung

Die Erfindung betrifft ein Verfahren (gemäß dem Oberbegriff des Anspruches 1) und eine Anlage (gemäß dem Oberbegriff des Anspruches 8) zur Zerkleinerung von Mahlgut. Ein derartiges Verfahren und eine derartige Anlage sind aus der CH-A-455 615 bekannt.

Auf diese Weise sollen vor allem relativ spröde Mahlgüter zerkleinert werden, wobei das bevorzugte Anwendungsgebiet in der Herstellung von Zement gesehen wird, wozu als Hauptkomponenten Zementklinker, Gips, Hüttensand getrennt oder als Gemisch zerkleinert werden. Die Zerkleinerung des Mahlgutes erfolgt dabei in einem geschlossenen Kreislauf, indem aus einer Mühle kommendes Zerkleinerungsprodukt in einer Klassierzone in Feingut, das als Fertiggut abgezogen wird, und in noch nicht genügend zerkleinertes Grobgut klassiert wird, das für eine weitere Zerkleinerung zur Mühle zurückgeführt wird.

Aus der Praxis ist es allgemein bekannt, daß Zemente oder ähnliche Produkte, die im geschlossenen Kreislauf mit einer Gutbett-Walzenmühle und einem Klassierer ermahlen werden, sich in ihren Qualitätseigenschaften von jenen Produkten unterscheiden, die in Rollenmühlen, Kugelmühlen oder dgl. erzeugt werden. Diese Qualitätsunterschiede äußern sich in erster Linie in einem gegenüber beispielsweise den Kugelmühlenprodukten erhöhten Wassergebrauch zur Normsteife von Zementmörtel bzw. Beton. Ausgehend von diesem Problem wird daher in der EP-A-406 591 u. a. vorgeschlagen, das aus einer Gutbettwalzenmühle kommende agglomerierte Zerkleinerungsprodukt, sogenannte Schülpen, zunächst zu desagglomerieren und danach einen Teil davon unmittelbar erneut der Mühle aufzugeben, während der andere Teil des Zerkleinerungsproduktes in zwei parallel geschalteten, unterschiedlich fein eingestellten Windsichtern gesichtet wird, d. h. der zur Klassierzone geführte Anteil des desagglomerierten Zerkleinerungsproduktes wird zunächst in einem Gutstromteiler in zwei Teilströme aufgeteilt, von denen der eine Teilstrom dem einen Windsichter und der andere Teilstrom dem parallel geschalteten zweiten Windsichter zugeleitet wird. Während der gesamte Grobgutanteil jedes Sichters direkt zur Mühle zurückgeführt wird, werden die Feingutanteile beider parallel geschalteter Sichter miteinander vermischt und abgeführt. Hierdurch soll die Möglichkeit geschaffen werden, daß sich die Korngrößenverteilung des Fertigproduktes bei energiesparender Zerkleinerung gezielt über einen großen Bereich einstellen läßt, um ein besonders günstiges Verarbeitungsverhalten bei einer gewünschten Festigkeitsentwicklung erzielen zu können.

Der Erfindung liegt nun die Aufgabe zugrunde, ein Verfahren entsprechend dem Oberbegriff des Anspruches 1 sowie eine Anlage gemäß dem Oberbegriff des Anspruches 8 derart weiterzuentwickeln, daß bei gezielten Einstellmöglichkeiten in der Korngrößenverteilung des Fertiggutes eine gewünschte Produktqualität mit einem weiterreduzierten, relativ niedrigen spezifischen Energieverbrauch erzielt werden kann.

Diese Aufgabe wird erfindungsgemäß zum einen durch die Verfahrensmaßnahmen im Kennzeichen des Anspruches 1 und zum andern durch die Anlagenmerkmale im Kennzeichen des Anspruches 8 gelöst.

Vorteilhafte Ausgestaltungen der Erfindung sind Gegenstand der Unteransprüche.

Nach diesem erfindungsgemäßen Verfahren wird das von der Mühle kommende Zerkleinerungsprodukt in der Klassierzone in wenigstens zwei in Reihe aufeinanderfolgenden Sichtstufen einer Windsichtung unterworfen, indem aus der ersten Windsichtstufe das anfallende Feingut abgezogen und das Grobgut in zwei Teilströme aufgeteilt wird, von denen ein erster Grobgut-Teilstrom unmittelbar zur Mühle zurückgeführt und ein zweiter Grobgut-Teilstrom einer zweiten Windsichtstufe aufgegeben wird, aus der dann alles Grobgut ebenfalls zur Mühle zurückgeführt und das Feingut mit dem Feingut der ersten Windsichtstufe zusammengeführt und dabei gemischt und als Fertiggut abgezogen wird.

Bei den der Erfindung zugrundeliegenden Versuchen konnte bestätigt werden, daß gerade diese Reihenschaltung von Windsichtstufen bzw. Windsichtern in der Klassierzone einen gegenüber der eingangs erläuterten bekannten Ausführung (EP-A-406 591) deutlich reduzierten spezifischen Energieverbrauch mit sich bringt. Dabei wird jedoch durch die erfindungsgemäß vorgeschlagene Reihenschaltung der Windsichtstufen/Windsichter eine ganz gezielte Einstellmöglichkeit für die Korngrößenverteilung im Fertiggut bzw. Fertigprodukt, d. h. eine gewollte und wirksame Beeinflussung in der Breite dieser Korngrößenverteilung geschaffen, wodurch die jeweils gewünschte bzw. erforderliche Produktqualität gewährleistet werden kann. Es ergibt sich auf diese Weise gewissermaßen eine Art Mehrparameter-Sichtung.

Besonders vorteilhaft ist es, wenn in der Klassierzone die erste Windsichtstufe als Feinsichtstufe und die zweite Windsichtstufe als Grobsichtstufe betrieben wird.

Weiterhin kann es in vielen Fällen von besonderem Vorteil sein, wenn das von der Mühle kommende Zerkleinerungsprodukt vor der eigentlichen Klassierzone (mit den beiden Windsichtstufen) noch einer Vorsichtung unterworfen wird, aus der das anfallende Grobgut ebenfalls zur Mühle zurückgeführt und nur das Feingut in die Klassierzone weitergeleitet wird. Eine solche relativ grobe Vorsichtung des Zerkleinerungsproduktes vor der Klassierzone wird vor allem dann bevorzugt, wenn bewußt ein dosierbarer Grobgutanteil in das Feingut/Fertiggut gelangen soll, um dadurch ein besonders breites Kornspektrum (mit ausreichend feinen und groben Gutanteilen) im Fertiggut zu erzielen. Durch die Verwendung dieser groben Vorsichtung können die Windsichtstufen in der Klassierzone entsprechend entlastet werden, wodurch sie einerseits gezielter eingesetzt und andererseits in gewollter Weise entlastet werden können. Letzteres bringt eine entsprechende Reduzierung im apparativen Aufwand mit sich. Darüber hinaus bringt die Entlastung der Windsichtstufen durch die Vorsichtung aber auch eine deutliche Verschleißminderung innerhalb der in den Windsichtstufen verwendeten Windsichter mit sich, da besonders schleißende, übermäßig grobe Gutgutanteile bereits in der Vorsichtung aus dem Zerkleinerungsprodukt abgetrennt und zur Mühle zurückgeführt werden können.

Eine besonders verschleißarme und energiesparende Vorsichtung des Zerkleinerungsproduktes kann besonders günstig in Form einer Wirbelschichtsichtung durchgeführt werden.

Eine sehr vorteilhafte und bevorzugte Ausführungsart der Erfindung wird ferner in einem Verfahren gesehen, bei dem das Mahlgut, insbesondere sprödes Mahlgut, besonders energiesparend in einer mit gegensinnig umlaufenden und mit hohem Druck gegeneinander gepreßten Walzen ausgestatteten Gutbettwalzenmühle zerkleinert wird. Hierbei ist es ferner zweckmäßig, das aus der Gutbettwalzenmühle kommende Zerkleinerungsprodukt vor seinem Einführen in die Klassierzone durch eine Desagglomerierstufe zu leiten, wobei wahlweise die Möglichkeit besteht, nach der Desagglomerierstufe einen Teil des aufgelösten Zerkleinerungsproduktes abzuzweigen, der für eine erneute Zerkleinerung direkt zur Mühle zurückgeführt wird, während dann der übrige Teil des Zerkleinerungsproduktes der Klassierzone zugeleitet wird.

Besonders vorteilhaft ist es ferner, wenn zumindest in der ersten Windsichtstufe eine besonders trennscharfe, in weiten Grenzen regelbare Hochleistungs-Windsichtung im Sinne einer Einstellbarkeit der Korngrößenverteilung des Feingutes durchgeführt wird. Besonders bevorzugt wird diese Ausgestaltung der Erfindung in Kombination mit einer Verwendung der zuvor angesprochenen Gutbettwalzenmühle für die Zerkleinerung des Mahlgutes.

Die Erfindung sei nachfolgend anhand einiger in der Zeichnung veranschaulichter Ausführungsbeispiele weiter erläutert.

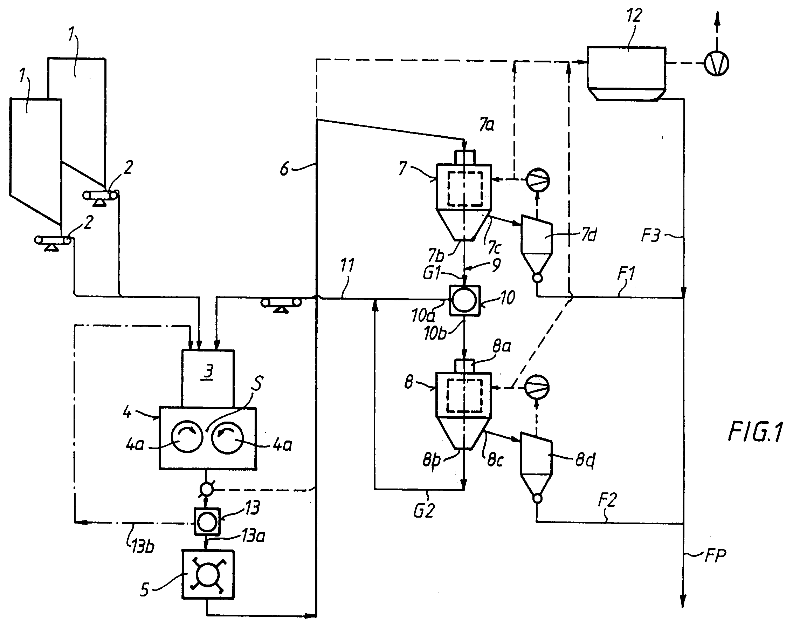

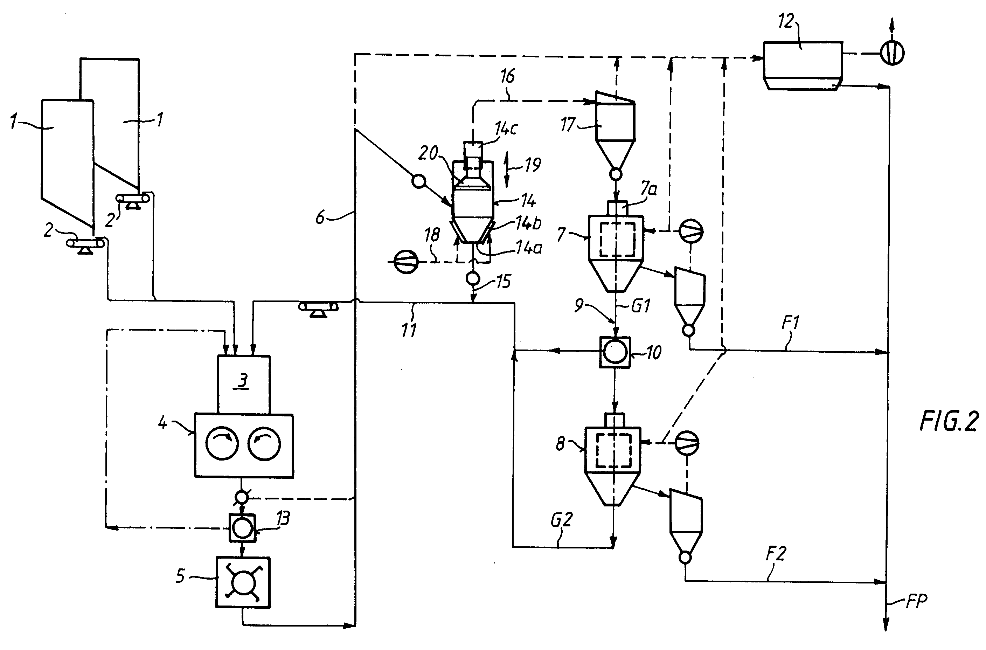

Die Zeichnung zeigt in den Fig.1 und 2 vereinfachte Schemata von zwei bevorzugten Ausführungsbeispielen der erfindungsgemäßen Zerkleinerungsanlage.

Bei beiden Ausführungsbeispielen sei angenommen, daß es sich bei der dort veranschaulichten Anlage um eine Zementmahlanlage handelt, in der eine oder mehrere Komponenten, z. B. Zementklinker, Gips, Hochofenschlacke (Hüttenzement) oder dgl., - allein oder gemeinsam - im Kreislauf zu Zement mit vorbestimmter Feinheit und Korngrößenverteilung zerkleinert werden können.

Nach dem in Fig.1 veranschaulichten ersten Ausführungsbeispiel enthält die Zerkleinerungsanlage mehrere Aufgabebunker 1 für verschiedene Mahlgutkomponenten, die beispielsweise mit Hilfe üblicher Bandwaagen 2 dosiert dem Guteinlaufschacht 3 einer Mühle 4 zugefördert werden können. Das aus dieser Mühle 4 auslaufende Zerkleinerungsprodukt kann wahlweise direkt - wie gestrichelt angedeutet - oder über einen noch näher zu erläuternden Desagglomerator 5 einer Fördereinrichtung 6, beispielsweise einem Becherwerk oder dgl., zugeführt werden, die es einer Klassierzone mit zwei Windsichtern, nämlich einem ersten Windsichter 7 und einem zweiten Windsichter 8 zufördert, in denen das Zerkleinerungsprodukt aus der Mühle 4 in Feingut (Pfeil F1 bzw. Pfeil F2) und Grobgut (gemäß Pfeile G1 und G2) klassiert wird. Diese beiden Windsichter 7, 8 der Klassierzone sind in Reihe bzw. in Serie hintereinandergeschaltet. Dabei ist zwischen dem Grobgutauslauf 7b des ersten Windsichters 7 und dem Guteinlauf 8a des zweiten Windsichters 8 eine Förderverbindung 9, beispielsweise in Form einer Förderleitung, vorgesehen, in der ein Grobgutteiler 10 mit zwei Grobgutabzweigen 10a und 10b angeordnet ist. Der erste Grobgutabzweig 10a dieses Grobgutteilers 10 steht über eine Rückförderleitung 11 mit dem Guteinlaufschacht 3 der Mühle 4 in Verbindung, während der zweite Grobgutabzweig 10b mit dem Guteinlauf 8a des zweiten Windsichters 8 verbunden ist. Somit kann ein wählbarer Anteil des Grobgutes G1 aus dem ersten Windsichter 7 dem in Reihe nachgeschalteten zweiten Windsichter 8 für die weitere Klassierung aufgegeben werden, während der übrige Teil des Grobgutes aus dem ersten Windsichter 7 über die Rückförderleitung 11 zur Mühle 4 für eine erneute Zerkleinerung zurückgeführt werden kann. Das durch den Grobgutauslauf 8b aus dem zweiten Windsichter 8 austretende Grobgut (G2) kann insgesamt ebenfalls zur Mühle 4 bzw. deren Einlaufschacht 3 - vorzugsweise ebenfalls über die Rückförderleitung 11 - zurückgeführt werden. Die Feingutabläufe 7a und 8a beider Windsichter 7, 8 sind zum gemeinsamen Abfördern der anfallenden Feingut-Teilströme (F1 und F2) zusammengeführt, wodurch das ingesamt in beiden Windsichtern 7, 8 anfallende Feingut gemischt und als Fertiggut bzw. Fertigprodukt (Pfeil FP) abgezogen werden kann.

Je nach Bedarf können die Feingut-Teilströme der beiden Windsichter 7, 8 von den Feingutabläufen 7c und 8c direkt zusammengeführt oder zuvor über je einen zugehörigen Abscheidezyklon 7d bzw. 8d geleitet werden, die mit einer Entstaubungseinrichtung 12, beispielsweise in Form eines geeigneten Filters, in Verbindung stehen, mit der auch die beiden Windsichter 7, 8 verbunden sein können (wie jeweils gestrichelt dargestellt ist). In der Entstaubungseinrichtung 12 abgeschiedenes Feingut kann - wie durch Pfeil F3 angedeutet - ebenfalls dem Fertigprodukt FP zugeführt werden.

Wie bereits weiter oben bei der Verfahrensweise geschildert worden ist, wird es vorgezogen, daß der erste Windsichter 7 in Form eines Feinsichters zur Erzielung eines besonders feinen Fertigproduktanteiles und der nachgeschaltete zweite Windsichter 8 in Form eines Grobsichters ausgeführt ist, dessen Feingutanteil (Pfeil F2) im Vergleich zum ersten Windsichter 7 verhältnismäßig grob gehalten werden kann, um dadurch die Korngrößenverteilung im Fertigprodukt FP in dem jeweils gewünschten und genügend großen Bereich einstellen zu können.

Es wird ferner vorgezogen, wenn wenigstens der erste Windsichter 7 in Form eines an sich bekannten Hochleistungssichters in Rotorbauweise ausgebildet ist, bei der die Rotordrehzahl und auch die Sichtluftzuführung und ggf. -verteilung einstellbar sind. Im Beispiel der Fig.1 sei angenommen, daß beide in Reihe hintereinandergeschalteten Windsichter 7, 8 in Form solcher Hochleistungssichter ausgebildet sind. Durch solche in weiten Grenzen regelbaren Hochleistungssichter ist es möglich, die Korngrößenverteilung sowohl des Feingutes (F1 und F2) jedes Windsichters 7 und 8 für sich als auch die Korngrößenverteilung des gemeinsamen Fertigproduktes FP aus beiden Windsichtern 7, 8 in der jeweils gewünschten Weise einstellen zu können.

Darüber hinaus besteht jedoch auch die Möglichkeit, den als Grobsichter ausgeführten zweiten Windsichter 8 anderweitig, beispielsweise und vorzugsweise als Wirbelschichtsichter mit wenigstens einem in seiner Höhenlage verstellbaren, oberen Austragskonus auszuführen. Eine solche Ausführungsform eines Wirbelschichtsichters wird weiter unten nochmals im Zusammenhang mit dem Anlagenbeispiel gemäß Fig.2 erläutert.

Als Mühle 4 zur Zerkleinerung der zugeführten Mahlgutkomponenten könnte generell jede geeignete Mühle verwendet werden. In der bisher beschriebenen Kombination von Anlagenteilen wird es jedoch besonders vorgezogen, für die Zerkleinerung des Mahlgutes eine an sich bekannte Gutbettwalzenmühle 4 zu verwenden, in der das Mahlgut im Mahlspalt S zwischen zwei gegensinnig umlaufenden und mit hohem Druck gegeneinander gepreßten Walzen 4a besonders energiesparend zerkleinert wird. Wenn bei dieser Zerkleinerung in der Gutbettwalzenmühle 4 - in Abhängigkeit vom Aufgabegut - ein agglomeriertes Zerkleinerungsprodukt, insbesondere in Form von sogenannten Schülpen, anfällt, dann wird es zweckmäßig sein, diese Schülpen in dem der Mühle 4 nachgeordneten Desagglomerator 5 zwecks verbesserter Sichtmöglichkeiten aufzulösen. Falls aber das aus der Mühle 4 kommende Zerkleinerungsprodukt kaum oder überhaupt keine Agglomerate enthält, dann kann der Desagglomerator 5 auch entfallen oder - wie gestrichelt angedeutet - umgangen werden.

Für manche Zerkleinerungsverfahren hat es sich als vorteilhaft erwiesen, wenn vor dem Desagglomerator 5 ein einstellbarer Anteil des von der Mühle 4 kommenden Zerkleinerungsproduktes abgezweigt und direkt zur Mühle 4 zurückgeführt wird, während nur der restliche Anteil des Zerkleinerungsproduktes dem Desagglomerator 5 zugeleitet wird, damit dort die Schülpen aufgelöst werden können (wie an sich bekannt). Dementsprechend ist es vorteilhaft, vor dem Desagglomerator 5 bzw. dessen Einlauf einen Produktteiler 13 anzuordnen, der über eine erste Abzweigleitung 13a mit dem Desagglomerator 5 und über eine zweite Abzweigleitung 13b - wie strichpunktiert angedeutet - mit dem Guteinlaufschacht 3 der Mühle 4 in Verbindung steht, so daß ein einstellbarer Anteil des von der Mühle 4 kommenden Zerkleinerungsproduktes im Desagglomerator 5 aufgelöst und dann über die Fördereinrichtung 6 der Klassierzone bzw. dem Guteinlauf 7a des ersten Windsichters 7 zugeführt wird, während der vor dem Desagglomerator 5 abgezweigte Zerkleinerungsproduktanteil für eine erneute Zerkleinerung zur Mühle 4 zurückgeführt wird.

Bei dem in Fig.2 veranschaulichten zweiten Ausführungsbeispiel der Zerkleinerungsanlage können die eigentliche Zerkleinerung sowie die Klassierung in der Klassierzone im Prinzip gleichartig und mit gleichen Anlagenteilen durchgeführt werden, wie es zuvor anhand des in Fig.1 veranschaulichten ersten Ausführungs-beispieles erläutert worden ist, so daß gleiche Anlagenteile mit denselben Bezugszeichen versehen sind und nicht nochmals im einzelnen erläutert werden müssen. Dementsprechend enthält auch dieses Ausführungsbeispiel grundsätzlich folgende Anlagen-teile:
Aufgabebunker 1,
Bandwaagen 2,
einen Guteinlaufschacht 3,
eine Mühle, vorzugsweise Gutbettwalzenmühle 4,
eventuell einen Desagglomerator 5,
eine Fördereinrichtung 6,
einen ersten Windsichter 7,
einen zweiten Windsichter 8,
eine Förderverbindung 9,
einen Grobgutteiler 10,
eine Rückförderleitung 11,
eine Entstaubungseinrichtung 12,
ggf. einen Produktteiler 13.

Die Besonderheit dieses zweiten Ausführungsbeispieles (Fig.2) liegt darin, daß dem ersten Windsichter 7 der Klassierzone ein grober Vorsichter 14 vorgeschaltet ist, der über eine Grobgut-Rückführleitung 15 - über die Rückförderleitung 11 - mit dem durch den Guteinlaufschacht 3 gebildeten Mühleneinlauf und über eine Feingutleitung 16 mit dem Guteinlauf 7a des ersten Windsichters in Verbindung steht. In dieser Feingutleitung 16 ist zweckmäßig noch ein Feingutabscheider 17 vorgesehen, wenn - wie im vorliegenden Falle - das Feingut aus dem Vorsichter 14 als Feingut-Luft-Gemisch abgefördert wird. Die aus dem Feingutabscheider 17 abzuführende Luft wird ebenfalls in die Entstaubungseinrichtung 12 eingeleitet.

Obwohl generell jeder geeignete Vorsichter als grober Vorsichter 14 verwendet werden kann, wird es - wie in Fig.2 schematisch veranschaulicht - vorgezogen, den Vorsichter 14 in Form eines Wirbelschichtsichters auszubilden. Dementsprechend weist der Vorsichter 14 in seinem unteren Bereich einen trichterförmigen Grobgutauslauf 14a und einen mit einer Sichtluftzuführung 18 verbundenen Anströmboden 14b auf, während in seinem oberen Bereich ein Auslaß 14c für ein Luft-Feingut-Gemisch und wenigstens ein in seiner Höhenlage - entsprechend Doppelpfeil 19 - verstellbarer Austrittskonus 20 vorgesehen sind. Durch die Ausbildung und Anordnung dieses - wenigstens einen - verstellbaren Austragskonus 20 kann die Trenngrenze des zu sichtenden Gutes (Zerkleinerungsprodukt) in gewünschter Weise eingestellt werden. Darüber hinaus ermöglicht dieses Vorsehen von wenigstens einem Austragskonus 20 eine relativ hohe spezifische Gutbettbeladung der den Vorsichter 14 am Auslaß 14c verlassenden Sichtluft, wodurch auch besonders hohe Durchsatzleistungen im Förderweg von der Mühle 4 zur Klassierzone mit den beiden Windsichtern 7 und 8 gewährleistet werden können. Darüber hinaus ist ein solcher Wirbelschichtsichter selbst bei verhältnismäßig abrasivem Gut nur einem verhältnismäßig geringen Verschleiß ausgesetzt, und er kann besonders energiesparend betrieben werden.

Die Anordnung eines solchen groben Vorsichters 14 hat den Vorteil, daß die Windsichter 7, 8 der Klassierzone von übermäßig grobem Sichtgut (Zerkleinerungsprodukt) freigehalten werden können, wodurch sie zum einen trennschärfer betrieben werden und in ihrer Bauform relativ klein ausgeführt sein können. Vor allem dann, wenn zumindest der erste Windsichter 7 der Klassierzone - wie weiter oben beschrieben - als Hochleistungssichter in Rotorbauweise ausgebildet ist, dann bietet die Anordnung des Vorsichters 14 noch dadurch einen weiteren Vorteil, daß besonders verschleißintensive Grobgutpartikel bereits vor dem ersten Windsichter 7 aus dem Zerkleinerungsprodukt abgeschieden und zur Mühle 4 zurückgeführt werden können, wodurch dieser erste Windsichter 7 vor einem übermäßigen Verschleißangriff durch besonders große Grobgutpartikel geschützt werden kann.

Im Zusammenhang mit der Ausbildung dieses Vorsichters 14 als Wirbelschichtsichter sei nochmals auf das Ausführungsbeispiel gemäß Fig.1 Bezug genommen, in dem - wie weiter oben angedeutet - der als Grobsichter wirkende zweite Sichter 8 der Klassierzone im Bedarfsfalle ebenfalls in Form eines Wirbelschichtsichters ausgeführt sein kann, und zwar im Prinzip gleichartig wie der Vorsichter 14, jedoch für die Klassierarbeit in der Klassierzone besonders angepaßt. Gleiches gilt selbstverständlich auch für den zweiten Windsichter 8 im Ausführungsbeispiel der Fig.2.

## Patentansprüche

1. Verfahren zur Zerkleinerung von Mahlgut, wobei das Mahlgut in einer Mühle zerkleinert und Zerkleinerungsprodukt aus der Mühle in einer Klassierzone in abzuziehendes Feingut und in Grobgut klassiert wird, das für eine weitere Zerkleinerung zur Mühle zurückgeführt wird, und wobei
das von der Mühle kommende Zerkleinerungsprodukt in der Klassierzone in wenigstens zwei in Reihe aufeinanderfolgenden Sichtstufen einer Windsichtung unterworfen wird, dadurch gekennzeichnet, daß aus einer ersten Windsichtstufe das anfallende Feingut abgezogen und das Grobgut in zwei Teilströme aufgeteilt wird, von denen ein erster Grobgut-Teilstrom zur Mühle zurückgeführt und ein zweiter Grobgut-Teilstrom einer zweiten Windsichtstufe aufgegeben wird, aus der alles Grobgut zur Mühle zurückgeführt und das Feingut mit dem Feingut der ersten Windsichtstufe zusammengeführt und abgezogen wird.

2. Verfahren nach Anspruch 1, dadurch gekennzeichnet, daß die erste Windsichtstufe als Feinsichtstufe und die zweite Windsichtstufe als Grobsichtstufe betrieben wird.

3. Verfahren nach Anspruch 1, dadurch gekennzeichnet, daß das Zerkleinerungsprodukt vor der Klassierzone einer groben Vorsichtung unterworfen wird, aus der das anfallende Grobgut zur Mühle zurückgeführt und
nur das Feingut in die Klassierzone weitergeleitet wird.

4. Verfahren nach Anspruch 3, dadurch gekennzeichnet, daß die Vorsichtung des Zerkleinerungsproduktes in Form einer Wirbelschichtsichtung durchgeführt wird.

5. Verfahren nach Anspruch 1, dadurch gekennzeichnet, daß das Mahlgut in einer mit gegensinnig umlaufenden und mit hohem Druck gegeneinander gepreßten Walzen ausgestatteten Gutbettwalzenmühle zerkleinert wird.

6. Verfahren nach Anspruch 5, dadurch gekennzeichnet, daß das aus der Gutbettwalzenmühle kommende Zerkleinerungsprodukt vor seinem Einführen in die Klassierzone durch eine Desagglomerationsstufe geleitet wird, wobei wahlweise vor der Desagglomerationsstufe ein Teil des Zerkleinerungsproduktes abgezweigt und direkt zur Mühle zurückgeführt wird.

7. Verfahren nach Anspruch 1, dadurch gekennzeichnet, daß zumindest in der ersten Windsichtstufe eine besonders trennscharfe, in weiten Grenzen regelbare Hochleistungswindsichtung im Sinne einer Einstellbarkeit der Korngrößenverteilung des Feingutes durchgeführt wird.

8. Anlage zur Zerkleinerung von Mahlgut, enthaltend
a) eine Mühle (4),
b) eine Klassierzone mit wenigstens zwei Windsichtern (7, 8) zum Klassieren des Zerkleinerungsproduktes aus der Mühle in Feingut (F1, F2) und Grobgut (G1, G2),
c) Einrichtungen zum Abziehen des Feingutes aus der Anlage sowie zum Zurückführen von Grobgut aus der Klassierzone zur Mühle vorgesehen sind,
d) wobei die beiden Windsichter (7, 8) der Klassierzone sind in Reihe hintereinandergeschaltet;
gekennzeichnet durch folgende Merkmale:
e) zwischen dem Grobgutauslauf (7b) des ersten Windsichters (7) und dem Guteinlauf (8a) des zweiten Windsichters (8) ist eine Förderverbindung (9) vorgesehen, in der ein Grobgutteiler (10) angeordnet ist, der einen mit der Mühle (4) verbundenen ersten Grobgutabzweig (10a) und einen mit dem Guteinlauf (8a) des zweiten Windsichters (8) verbundenen zweiten Grobgutabzweig (10b) aufweist, wobei aus dem zweiten Windsichter (8) alles Grobgut zur Mühle (4) zurückführbar ist;
f) die Feingutabläufe (7c, 8c) beider Windsichter (7, 8) sind zum gemeinsamen Abfördern der anfallenden Feingutteilströme zusammengeführt.

9. Anlage nach Anspruch 8, dadurch gekennzeichnet, daß der erste Windsichter (7) ein Feingutsichter und der nachgeschaltete zweite Windsichter (8) als Grobsichter ausgeführt ist.

10. Anlage nach Anspruch 9, dadurch gekennzeichnet, daß wenigstens der erste Windsichter (7) als Hochleistungssichter in Rotorbauweise mit einstellbarer Rotordrehzahl und einstellbarer Sichtluftführung ausgebildet ist.

11. Anlage nach Anspruch 10, dadurch gekennzeichnet, daß beide Windsichter (7, 8) als Hochleistungssichter ausgebildet sind.

12. Anlage nach Anspruch 10, dadurch gekennzeichnet, daß der zweite Windsichter als Wirbelschichtsichter mit wenigstens einem in seiner Höhenlage verstellbaren, oberen Austrittskonus ausgeführt ist.

13. Anlage nach Anspruch 8, dadurch gekennzeichnet, daß dem ersten Windsichter (7) der Klassierzone ein grober Vorsichter (14) vorgeschaltet ist, der über eine Grobgut-Rückführleitung (15) mit dem Mühleneinlauf (3) und über eine Feingutleitung (16) mit dem Guteinlauf (7a) des ersten Windsichters (7) in Verbindung steht.

14. Anlage nach Anspruch 13, dadurch gekennzeichnet, daß der Vorsichter (14) durch einen Wirbelschichtsichter gebildet ist, der in seinem unteren Bereich einen Grobgutauslauf (14a) und einen mit einer Sichtluftzuführung (18) verbundenen Anströmboden (14b) und in seinem oberen Bereich einen Auslaß (14c) für ein Luft-Feingut-Gemisch sowie wenigstens einen in seiner Höhenlage verstellbaren Austragskonus (20) aufweist.

15. Anlage nach Anspruch 8, gekennzeichnet durch eine als Gutbettwalzenmühle (4) mit zwei gegensinnig umlaufenden und mit hohem Druck gegeneinander gepreßten Walzen (4a) ausgebildete Mühle.

16. Anlage nach Anspruch 15, dadurch gekennzeichnet, daß zwischen der Mühle (4) und der Klassierzone ein Desagglomerator (5) zum Auflösen von aus der Mühle kommendem agglomeriertem Zerkleinerungsprodukt angeordnet ist.

17. Anlage nach Anspruch 16, dadurch gekennzeichnet, daß vor dem Desagglomerator (5) ein Produktteiler (13) angeordnet ist, der über eine erste Abzweigleitung (13a) mit dem Desagglomerator (5) und über eine zweite Abzweigleitung (13b) mit dem Mühleneinlauf (3) in Verbindung steht.

## Claims

1. Method for the comminution of material for grinding, wherein the material for grinding is comminuted in a mill and comminuted product from the mill is classified in a classification zone into fines to be drawn off and oversize material to be returned to the mill for further comminution, and wherein in the classification zone the comminuted product coming from the mill is subjected to air separation in at least two separating stages arranged one after the other in series, characterised in that the accumulated fines are drawn off from a first air separation stage and the oversize material is divided into two part-streams, of which one first oversize material part-stream is returned directly to the mill and a second oversize material part-stream is delivered to a second air separation stage, from which all oversize material is returned to the mill and the fines are brought together with the fines from the first air separation stage and drawn.

2. Method as claimed in Claim 1, characterised in that the first air separation stage is operated as the fine separation stage and the second air separation stage is operated as the coarse separation stage.

3. Method as claimed in Claim 1, characterised in that before the classification zone the comminuted product is subjected to a coarse preliminary separation from which the accumulated oversize material is returned to the mill and only the fines are passed on to the classification zone.

4. Method as claimed in Claim 3, characterised in that the preliminary separation of the comminuted product is carried out in the form of a fluidised bed separation.

5. Method as claimed in Claim 1, characterised in that the material for grinding is comminuted in a material bed roll mill equipped with rolls which revolve in opposite directions and are pressed against one another at high pressure.

6. Method as claimed in Claim 5, characterised in that the comminuted product coming from the material bed roll mill is passed through a disagglomeration stage before being introduced into the classification zone, in which case if required a proportion of the comminuted product is branched off before the disagglomeration stage and returned directly to the mill.

7. Method as claimed in Claim 1, characterised in that at least in the first air separation stage a particularly selective high-capacity air separation which can be regulated within wide limits is carried out in terms of adjustability of the particle size distribution of the fine material.

8. Apparatus for the comminution of material for grinding, comprising
a) a mill (4),
b) a classification zone with at least two air separators (7, 8) for classification of the comminuted product from the mill into fines (F1, F2) and oversize material (G1, G2),
c) wherein arrangements are providing for drawing off the fines from the apparatus and for returning oversize material from the classification zone to the mill,
d) wherein the two air separators (8, 9) of the classification zone are connected behind one another in series;
characterised by the following features:
e) between the oversize material outlet (7b) of the first air separator (7) and the material inlet (8a) of the second air separator (8) there is provided a conveyor connection (9) in which is arranged an oversize material divider (10) which has a first oversize material branch (10a) connected to the mill (4) and a second oversize material branch (10b) connected to the material inlet (8a) of the second air separator (8), all oversize material from the second air separator (8) being returnable to the mill (4);
f) the fine material outlets (7c, 8c) of both air separators 97, 8) are brought together for common removal of the accumulated part-streams of fines.

9. Apparatus as claimed in Claim 8, characterised in that the first air separator (7) is a fine separator and the subsequent second air separator (8) is constructed as a coarse separator.

10. Apparatus as claimed in Claim 9, characterised in that at least the first air separator (7) is constructed as a high-capacity separator in the manner of a rotor with adjustable rotor speed and adjustable separating air supply.

11. Apparatus as claimed in Claim 10, characterised in that both air separators (7, 8) are constructed as high-capacity separators.

12. Apparatus as claimed in Claim 10, characterised in that the second air separator is constructed as a fluidised bed separator with at least one upper discharge cone which is adjustable in height.

13. Apparatus as claimed in Claim 8, characterised in that a coarse preliminary separator (14) is arranged before the first air separator (7) of the classification zone and is connected by an oversize material return line (15) to the mill inlet (3) and is connected by a fines line (16) to the material inlet (7a) of the first air separator (7).

14. Apparatus as claimed in Claim 13, characterised in that the preliminary separator (14) is formed by a fluidised bed separator which has in its lower region an oversize material outlet (14a) and an inlet base (14b) connected to a separating air supply (18) and has in its upper region an outlet (14c) for an air/fines mixture as well as at least one outlet cone (20) which is adjustable in height.

15. Apparatus as claimed in Claim 8, characterised by a mill constructed as a material bed roll mill (4) with two rolls (4a) which revolve in opposite directions and are pressed against one another at high pressure.

16. Apparatus as claimed in Claim 15, characterised in that a disagglomerator (5) for breaking up agglomerated comminution product coming from mill is arranged between the mill (4) and the classification zone.

17. Apparatus as claimed in Claim 16, characterised in that a product divider (13) which is connected by a first branch line (13a) to the disagglomerator (5) and by a second branch line (13b) to the mill inlet (3) is arranged before the disagglomerator (5).

## Revendications

1. Procédé de fragmentation de matière à broyer, suivant lequel la matière à broyer est fragmentée dans un broyeur et le produit de fragmentation provenant du broyeur est classé dans une zone de classement en matière à granulométrie fine devant être soutirée et en matière à granulométrie grossière qui est recyclée sur le broyeur pour une autre fragmentation et suivant lequel le produit de fragmentation provenant du broyeur est soumis dans la zone de classement à un triage à l'air dans au moins deux étages de séparation qui se succèdent en série, caractérisé en ce que la matière à granulométrie fine provenant du premier étage de triage à l'air est soutirée et la matière à granulométrie grossière est subdivisée en deux courants partiels dont un premier courant partiel de matière à granulométrie grossière est recyclé sur le broyeur et un second courant partiel de matière à granulométrie grossière est envoyé dans un second étage de triage à l'air dont la totalité de la matière à granulométrie grossière est recyclée sur le broyeur et la matière à granulométrie fine est réunie à la matière à granulométrie fine provenant du premier étage de triage à l'air, puis soutirée.

2. Procédé selon la revendication 1, caractérisé en ce que le premier de triage à l'air est exploité en étage de séparation fine et le second étage de triage à l'air est exploité en étage de séparation grossière.

3. Procédé selon la revendication 1, caractérisé en ce que le produit de fragmentation est soumis en amont de la zone de classement à une séparation préalable grossière dont la matière à granulométrie grossière qui en provient est recyclée sur le broyeur et seule la matière à granulométrie fine est transmise à la zone de classement.

4. Procédé selon la revendication 3, caractérisé en ce que la séparation préalable du produit de fragmentation est effectuée sous la forme d'une séparation en couche tourbillonnaire.

5. Procédé selon la revendication 1, caractérisé en ce que la matière à broyer subit la fragmentation dans un broyeur à cylindres et à lit de matière, qui est équipé de cylindres tournant en sens inverses et serrés l'un contre l'autre sous pression élevée.

6. Procédé selon la revendication 5, caractérisé en ce que le produit de fragmentation provenant du broyeur à cylindres et à lit de matière est dirigé avant son introduction dans la zone de classement dans un étage de désagglomération, une partie du produit de fragmentation étant déviée sélectivement devant l'étage de désagglomération et recyclée directement sur le broyeur.

7. Procédé selon la revendication 1, caractérisé en ce qu'un triage à l'air à grande capacité, réglable dans de larges limites, et dont la séparation est particulièrement nette est effectué au moins dans le premier étage de triage à l'air dans le sens d'une possibilité de réglage de la distribution granulométrique du produit à granulométrie fine.

8. Installation de fragmentation de matière à broyer, comprenant
a) un broyeur (4),
b) une zone de classement comprenant au moins deux séparateurs à vent (7, 8) de classement du produit de fragmentation provenant du broyeur en matière à granulométrie (F1, F2) et en matière à granulométrie grossière (G1, G2),
c) des dispositifs sont prévus pour soutirer la matière à granulométrie fine provenant de l'installation ainsi que pour recycler la matière à granulométrie grossière provenant de la zone de classement sur le broyeur,
d) les deux séparateurs à vent (7, 8) de la zone de classement étant montés en série à la suite l'un de l'autre ;
caractérisée par les particularités suivantes :
e) une liaison de transport (9) est prévue entre la sortie (7b) de la matière à granulométrie grossière du premier séparateur à vent (7) et l'admission (8a) de la matière du second séparateur à vent (8) et un diviseur (10) de la matière à granulométrie grossière qui est disposé dans la liaison de transport (9) comprend un premier embranchement de la matière à granulométrie grossière (10a) qui est relié au broyeur (4) et un second embranchement (10b) de la matière à granulométrie grossière qui est relié à l'admission (8a) de la matière du second séparateur à vent (8), la totalité de la matière à granulométrie grossière provenant du second séparateur à vent (8) étant recyclée sur le broyeur (4);
f) les sorties de la matière à granulométrie fine (7c, 8c) des deux séparateurs à vent (7, 8) étant réunies pour l'évacuation commune des courants partiels résultants de matière à granulométrie fine.

9. Installation selon la revendication 8, caractérisée en ce que le premier séparateur à vent (7) est un séparateur de matière à granulométrie fine et le second séparateur (8) à vent monté en aval est réalisé en séparateur grossier.

10. Installation selon la revendication 9, caractérisé en ce qu'au moins le premier séparateur à vent (7) est réalisé en séparateur à capacité élevée du type à rotor, dont la vitesse de rotation du rotor est réglable et dont l'arrivée d'air de séparation est réglable.

11. Installation selon la revendication 10, caractérisée en ce que les deux séparateurs à vent (7, 8) sont réalisés en séparateurs à grande capacité.

12. Installation selon la revendication 10, caractérisée en ce que le second séparateur à vent est réalisée en séparateur à couche tourbillonnaire comprenant un cône supérieur de sortie dont la position en hauteur est réglable.

13. Installation selon la revendication 8, caractérisée en ce qu'un séparateur préalable grossier (14), monté en amont du premier séparateur à vent (7) de la zone de classement, communique par un conduit (15) de recyclage de la matière à granulométrie grossière avec l'admission (3) du broyeur et par un conduit (16) de produit à granulométrie fine avec l'admission (7a) de matière du premier séparateur à vent (7).

14. Installation selon la revendication 13, caractérisée en ce que le séparateur préalable (14) est formé d'un séparateur à couche tourbillonnaire qui comprend dans sa partie inférieure une sortie (14a) de matière à granulométrie grossière et un fond de soufflage (14b) relié à une arrivée (18) d'air de séparation et, dans sa partie supérieure, une sortie (14c) d'un mélange de matière à granulométrie fine et d'air ainsi qu'au moins un cône de décharge (20) dont la position en hauteur est réglable.

15. Installation selon la revendication 8, caractérisé par un broyeur (4) à cylindres et à lit de matière réalisé en broyeur à deux cylindres (4a) tournant en sens inverses et serrés sous haute pression l'un contre l'autre.

16. Installation selon la revendication 15, caractérisée en ce qu'un désagglomérateur (5) destiné à désagréger le produit de fragmentation aggloméré, provenant du broyeur, est disposé entre le broyeur (4) et la zone de classement.

17. Installation selon la revendication 16, caractérisée en ce qu'un diviseur de produit (13) disposé en amont du désagglomérateur (5) communique par un premier conduit d'embranchement (13a) avec le désagglomérateur (5) et par un second conduit d'embranchement (13b) avec l'admission du broyeur (3).
